# EUROPEAN PATENT SPECIFICATION

(11) **EP 4 231 485 B1**
(45) Date of publication and mention of the grant of the patent: **15.04.2026**
(21) Application number: 22846113.3
(22) Date of filing: 11.07.2022
(51) Int. Cl.: H02J 7/00, H02J 7/34, G01R 31/36, H01M 10/42

(54) **DEVICE FOR MANAGING BATTERY, AND BATTERY SYSTEM**
VORRICHTUNG ZUR VERWALTUNG EINER BATTERIE UND BATTERIESYSTEM
DISPOSITIF DE GESTION DE BATTERIE ET SYSTÈME DE BATTERIE

(30) Priority: 19.07.2021 KR 20210094503
(43) Date of publication of application: 23.08.2023
(73) Proprietor: LG Energy Solution, Ltd., Seoul 07335 (KR)
(72) Inventor: KIM, Duk You, Daejeon 34122 (KR); HAM, Seok Hyeong, Daejeon 34122 (KR)
(74) Representative: Goddar, Heinz J.
(86) International application number: PCT/KR2022/010028
(87) International publication number: WO 2023/003241

(56) References cited:
- WO-A1-2020/196438
- WO-A1-2021/138249
- JP-A- 2011 176 987
- KR-A- 20160 072 410
- KR-A- 20170 089 603
- KR-A- 20170 089 603
- KR-A- 20190 051 477
- US-A- 5 677 077
- US-A1- 2021 126 472

## Description

### [Technical Field]

### TECHNICAL FIELD

Embodiments disclosed herein relate to a battery management apparatus and a battery system.

### [Background Art]

A secondary battery is generally used as a battery pack including a battery module where a plurality of battery cells are connected to one another in series and/or in parallel. Battery packs may be managed and controlled by a battery management system (BMS) in terms of their states and operations.

With the increasing demand for such battery packs, the importance of the BMS for managing a battery is growing. To simply perform a function of measuring a voltage of each battery cell among various functions of the BMS, a monitoring integrated circuit (IC) is used. A voltage of each battery cell is input through a sensing line such that the monitoring IC may periodically measure the voltage of the battery cell.

In this case, a current for driving the monitoring IC is supplied from a battery module, and a big error occurs in measuring voltages of battery cells at opposite ends due to the current and an internal resistor of the battery module. Due to such an error, the voltages of the battery cells at the opposite ends of the battery module are measured lower than those of other battery cells, and a separate voltage measuring apparatus is required to correct the error.
The prior art relevant to the present invention is given by US 2021/126472 A1, WO 2021/138249 A1, KR 2017 0089603 A and US 5 677 077 A.

### [Disclosure]

### [Technical Problem]

Embodiments disclosed herein aim to provide a battery management apparatus and a battery system capable of increasing accuracy and improving reliability in measuring a voltage of a battery cell by temporally separating a sensing line and a driving current line, which are shared for a battery module, from each other.

### [Technical Solution]

The present invention is defined according to the subject matter of the appended independent claim 1.
Particular embodiments are given by the additional features of the appended dependent claims. A battery management apparatus according to an embodiment disclosed herein includes a switching unit configured to control electrical connection with a battery module and a controller configured to measure a voltage of a battery cell included in the battery module and to control a driving current transferred from the battery module by controlling on/off of the switching unit when the voltage of the battery cell is measured.

According to an embodiment, when the switching unit is turned on, the battery module and the controller may be electrically connected to each other to transfer the driving current through an internal resistor of the battery module.

The controller is further configured to turn off the switching unit when the voltage of the battery cell is measured.

According to an embodiment, the internal resistor of the battery module may be an internal resistor of battery cells provided at opposite ends among a plurality of battery cells included in the battery module.

According to an embodiment, the controller may be further configured to generate a control signal for turning off the switching unit when the voltage of the battery cell is measured.

According to an embodiment, the switching unit may be provided inside the controller.

The driving current is a driving current of the controller.

According to an embodiment, the battery management apparatus may further include a power supply unit configured to supply the driving current to the controller.

According to an embodiment, the power supply unit may be further configured to supply stored power to the controller when the switching unit is turned off by the controller.

According to an embodiment, the power supply unit may include at least one capacitor.

According to an embodiment, the capacitor of the power supply unit may be charged by being supplied with power from the battery module when the switching unit is in an on state.

A battery system according to an embodiment disclosed herein includes a battery module including a plurality of battery cells, an electricity storage unit connected to the battery module to store a voltage of each battery cell, a switching unit provided between the battery module and a controller to control electrical connection between the battery module and the controller, and a controller configured to measure the voltage of the battery cell based on the voltage stored in the electricity storage unit and to control a driving current transferred from the battery module by controlling on/off of the switching unit when the voltage of the battery cell is measured.

According to an embodiment, the electricity storage unit may include a plurality of capacitors provided to correspond to the battery cells, respectively.

According to an embodiment, when the switching unit is turned on, the battery module and the controller may be electrically connected to each other to transfer the driving current through an internal resistor of the battery module.

According to an embodiment, the controller may be further configured to turn off the switching unit when the voltage of the battery cell is measured.

According to an embodiment, the battery system may further include a power supply unit connected to the controller to supply the driving current to the controller when the switching unit is turned off.

According to an embodiment, the power supply unit may be further configured to supply stored power to the controller when the switching unit is turned off by the controller.

According to an embodiment, the power supply unit may include at least one capacitor.

### [Advantageous Effects]

A battery management apparatus and a battery system according to an embodiment disclosed herein may increase accuracy and improve reliability in measuring a voltage of a battery cell by temporally separating a sensing line and a driving current line, which are shared for a battery module, from each other.

### [Description of Drawings]

FIG. 1 is a block diagram showing configurations of a battery management apparatus and a battery system including the same, according to an embodiment disclosed herein.
FIG. 2 is a view of a conventional battery management apparatus.
FIG. 3 is a view of a battery management apparatus according to an embodiment disclosed herein.
FIG. 4 is a view of a battery management apparatus according to another embodiment disclosed herein.
FIG. 5 is a flowchart illustrating a control method of a battery management apparatus according to an embodiment disclosed herein.
FIG. 6 is a block diagram showing a hardware configuration of a computing system for performing a control method of a battery management apparatus, according to an embodiment disclosed herein.

### [Mode for Invention]

Hereinafter, various embodiments disclosed herein will be described in detail with reference to the accompanying drawings. In this document, identical reference numerals will be used for identical components in the drawings, and the identical components will not be redundantly described.

For various embodiments disclosed herein, specific structural or functional descriptions are only exemplified for the purpose of describing the embodiments, and various embodiments disclosed herein may be implemented in various forms, and should not be construed as being limited to the embodiments described herein.

As used in various embodiments, the terms "1st, "2nd", "first", "second", or the like may modify various components regardless of importance, and do not limit the components. For example, a first component may be named as a second component without departing from the right scope of an embodiment disclosed herein, and similarly, the second component may be named as the first component.

Terms used in the present document are used for only describing a specific exemplary embodiment of the disclosure and may not have an intention to limit the scope of other exemplary embodiments of the disclosure. It is to be understood that the singular forms include plural references unless the context clearly dictates otherwise.

All terms including technical and scientific terms used herein have the same meaning as commonly understood by one of ordinary skill in the art to which the embodiments disclosed herein belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some cases, the terms defined herein may be interpreted to exclude embodiments disclosed herein.

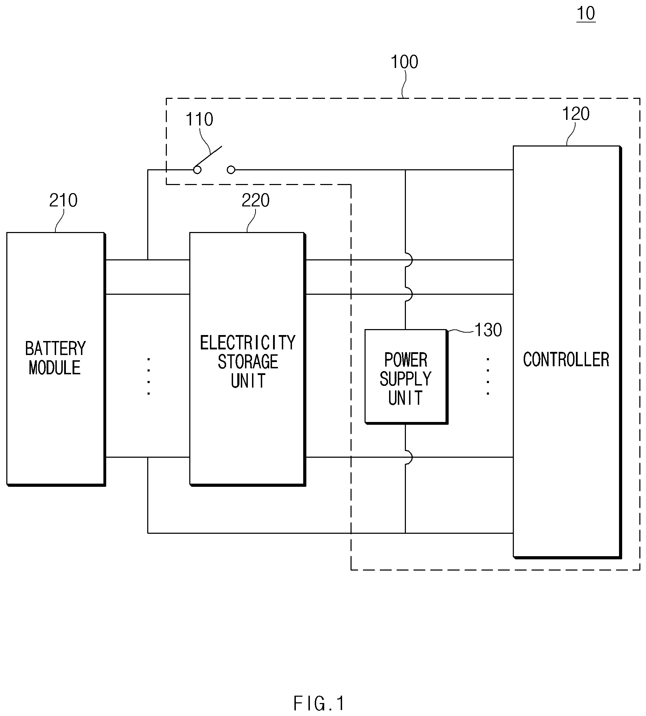

FIG. 1 is a block diagram showing configurations of a battery management apparatus and a battery system including the same, according to an embodiment disclosed herein.

Referring to FIG. 1, a battery system 10 according to an embodiment disclosed herein may include a battery management apparatus 100, a battery module 210, and an electricity storage unit 220. The battery management apparatus 100 according to an embodiment disclosed herein may include a switching unit 110, a controller 120, and a power supply unit 130.

The switching unit 110 may be provided to control a driving current applied from the battery module 210. Herein, the driving current may be a current for driving the controller 120. That is, the switching unit 110 may be provided between the battery module 210 and the controller 120 to control electrical connection between the battery module 210 and the controller 120. In this case, when the switching unit 210 is turned on, the battery module 210 and the controller 120 may be electrically connected to each other such that a driving current may be transferred to the controller 120 through an internal resistor of the battery module 210. Moreover, the switching unit 110 may include at least one switch, and may be provided at one end of the battery module 210. For example, the switching unit 110 may be provided outside or inside the controller 120.

The controller 120 may measure a voltage of each battery cell based on a voltage stored in the electricity storage unit 220. When a voltage of each battery cell is measured, the controller 120 may control the driving current transferred from the battery module 210 by controlling on/off of the switching unit 110. When the voltage of the battery cell is measured, the controller 120 may turn off the switching unit 110 such that the driving current does not flow from the battery module 210.

That is, when the voltage of the battery cell included in the battery module 210 is measured, the controller 120 may control the driving current by controlling on/off of the switching unit 110. When the voltage of the battery cell is measured, the controller 120 turns off the switching unit 110 such that the driving current does not flow to the internal resistor of the battery module. For example, the internal resistor of the battery module 210 may be an internal resistor of battery cells provided at opposite ends among a plurality of battery cells included in the battery module 210.

When the voltage of the battery cell is measured, the controller 120 may generate a control signal for turning off the switching unit 110. The generated control signal may be transferred to the switching unit 110 to control an operation of the switching unit 110. For example, the controller 120 may include a monitoring integrated circuit (IC) provided in the battery management apparatus 50.

The power supply unit 130 may supply the driving current to the controller 120. For example, when the switching unit 110 is turned off by the controller 120, the power supply unit 130 may supply previously stored power to the controller 120. For instance, the power supply unit 130 may include a capacitor that may be charged by being supplied with power from the battery module 210 when the switching unit 110 is in an on state.

That is, when the switching unit 110 is in the on state, the power supply unit 130 may be charged with power being supplied from the battery module 210, and when the switching unit 110 is turned off, the power supply unit 130 may provide the driving current to the controller 120 based on the charged power.

The battery module 210 may include a plurality of battery cells. In this case, the battery module 210 may include the plurality of battery cells and an internal resistor.

The electricity storage unit 220 may be connected to the battery module 210 to store a voltage of each battery cell. For example, the electricity storage unit 220 may include a plurality of capacitors provided to correspond to respective battery cells. Thus, the controller 120 may detect a voltage of each battery cell by measuring a voltage stored in the electricity storage unit 220.

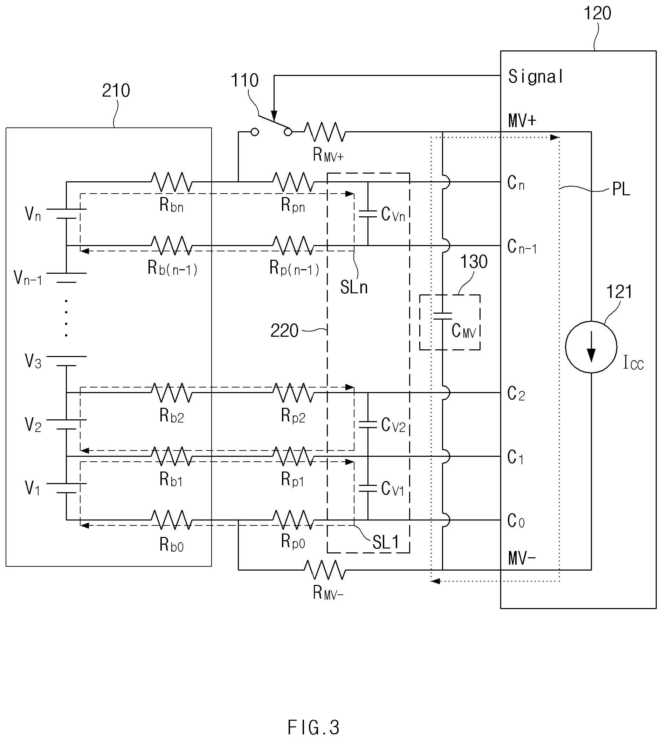

As such, the battery management apparatus 100 according to an embodiment disclosed herein may increase accuracy and improve reliability in measuring a voltage of a battery cell by temporally separating a sensing line and a driving current line (see FIG. 3), which are shared for a battery module, from each other. This will be described in more detail below.

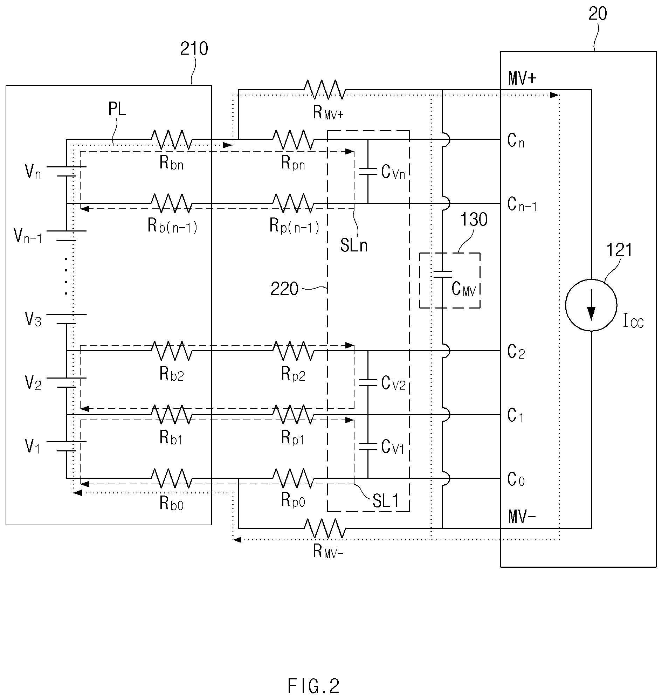

FIG. 2 is a view of a general battery management apparatus.

Referring to FIG. 2, for the general battery management apparatus, voltages V₁ - Vₙ of respective battery cells may be applied to capacitors C_{V1} - C_{Vn} through sensing lines SL1 - SLn. In this case, in a controller 120 (e.g., the monitoring IC), a voltage of a battery cell may be measured using voltages of the capacitors C_{V1} - C_{Vn}. R_{MV} of FIG. 2 may be a parasitic resistor of a driving current line PL, and Rₚ may be a parasitic resistor of a sensing line SL.

Meanwhile, a driving current I_{CC} of the controller 20 may be supplied from the battery module 210 and may flow through a path of the driving current line PL. While it is shown in FIG. 2 that the driving current source I_{CC} 121 exists inside the controller 20, the driving current I_{CC} 121 may be actually a current applied from the battery module 210.

While the sensing lines SL1 - SLn may be separated from the driving current line PL outside the battery module 210 in the general battery management apparatus as shown in FIG. 2 (that is, Rₚₙ and R_{MV+}, Rₚ₀ and R_{MV-}), the sensing lines SL1 - SLn may not be separated from the driving current line PL inside the battery module 210.

As such, the current of the sensing lines SL1 - SLn and the driving current line PL flows in internal resistors R_{b0} and R_{bn} located at opposite ends of the battery module 210 in FIG. 2, and such a driving current has a high voltage value, resulting in voltage drops in R_{b0} and R_{bn}. Thus, a significantly smaller voltage than V₁ and Vₙ may be applied to C_{V1} and C_{Vn}, such that voltages of battery cells located at the opposite ends of the battery module 210 may be measured lower than those of other battery cells at all times.

FIG. 3 is a view of a battery management apparatus according to an embodiment disclosed herein.

Referring to FIG. 3, the battery management apparatus 100 according to an embodiment disclosed herein may generate a switch control signal when the controller 120 generates a voltage measurement command for a battery cell. Thus, the controller 120 may turn off the switching unit 110 to control the driving current not to flow to the internal resistors R_{b0} and R_{bn} of the battery module 120.

The capacitors C_{V1} - C_{Vn} of FIG. 3 have relatively small capacitances, and thus may be fixed to the voltages V₁ - Vₙ of corresponding battery cells shortly after the switching unit 110 is turned off. The controller 120 may perform voltage measurement for each battery cell, and may accurately measure an actual voltage of a battery cell without an error caused by the internal resistors R_{b0} and R_{bn} of the battery cells.

Meanwhile, when the controller 120 measures a voltage of each battery cell (that is, the switching unit 110 is in an off state), the driving current of the controller 120 may be supplied from the power supply unit 130 C_{MV}. The power supply unit 130 C_{MV} may perform a function of preventing oscillation of a voltage of the battery module 210.

When the controller 120 has completed voltage measurement for a battery cell, the switching unit 110 may be turned on by a switch control signal of the controller 120 and the power supply unit 130 may start charging from the battery module 210.

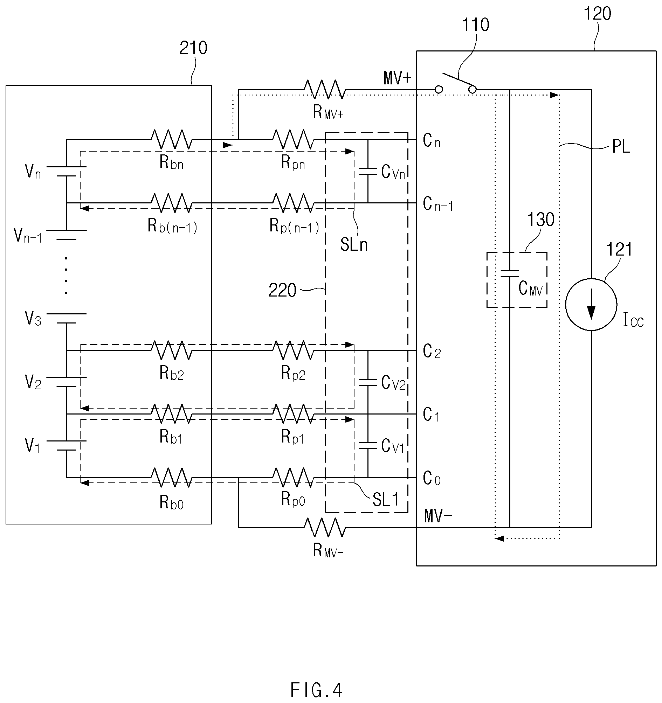

FIG. 4 is a view of a battery management apparatus according to another embodiment disclosed herein.

Referring to FIG. 4, the battery management apparatus 100 according to an embodiment disclosed herein may internalize the switching unit 110 in the controller 120. In this case, the switching unit 110 is included in the controller 120, such that it is not necessary to transmit an additional switch control signal to the outside of the controller 120, and thus the controller 120 may have a function that is substantially the same as the battery management apparatus 100 without changing an external circuit of the controller 120.

Meanwhile, a basic control operation of the battery management apparatus 100 shown in FIG. 4 is substantially the same as that of the battery management apparatus 100 of FIG. 3, and thus a detailed description thereof will be omitted.

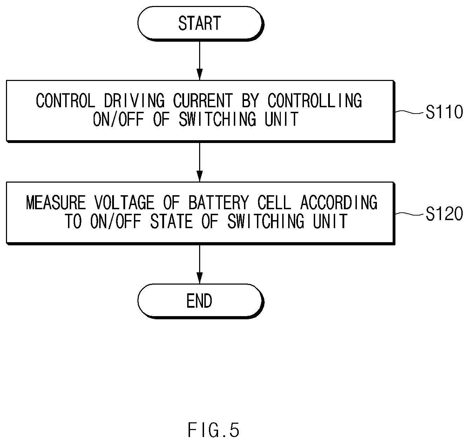

FIG. 5 is a flowchart illustrating a control method of a battery management apparatus according to an embodiment disclosed herein.

The control method of the battery management apparatus 100 according to an embodiment disclosed herein in FIG. 5 may be a method of controlling a battery management apparatus including the switching unit 110 provided to control a driving current applied from a battery module and the controller 120 for controlling the driving current by controlling on/off of the switching unit 110. Herein, the driving current may be a current for driving the controller 120. Moreover, the switching unit 110 may include at least one switch, and may be provided at one end of the battery module. For example, the switching unit 110 may be provided outside or inside the controller 120.

Referring to FIG. 5, the battery management apparatus 100 according to an embodiment disclosed herein may control the driving current by controlling on/off of the switching unit 110, in operation S110. The voltage of the battery cell may be measured according to an on/off state of the switching unit 110, in operation S120.

More specifically, in the control method of the battery management apparatus 100 according to an embodiment disclosed herein, when the voltage of the battery cell is measured through the controller 120, the controller 120 may turn off the switching unit 110 such that the driving current does not flow to the internal resistor of the battery module. For example, the internal resistor of the battery module may be an internal resistor of battery cells provided at opposite ends among a plurality of battery cells included in the battery module.

When the voltage of the battery cell is measured in operation S120, the controller 120 may generate a control signal for turning off the switching unit 110. The generated control signal may be transferred to the switching unit 110 to control an operation of the switching unit 110.

Although not shown in FIG. 5, the control method of the battery management apparatus 100 according to an embodiment disclosed herein may further include an operation of supplying the driving current to the controller 120 through the power supply unit 130. For example, when the switching unit 110 is turned off by the controller 120, the power supply unit 130 may supply previously stored power to the controller 120. In this case, the power supply unit 130 may include a capacitor that may be charged by being supplied with power from the battery module when the switching unit 110 is in an on state.

That is, when the switching unit 110 is in the on state, the power supply unit 130 may be charged with power being supplied from the battery module, and when the switching unit 110 is turned off, the power supply unit 130 may supply, to the controller 120, the charged power that serves as the driving current.

As such, a battery management method according to an embodiment disclosed herein may increase accuracy and improve reliability in measuring a voltage of a battery cell by temporally separating a sensing line and a driving current line, which are shared for a battery module, from each other.

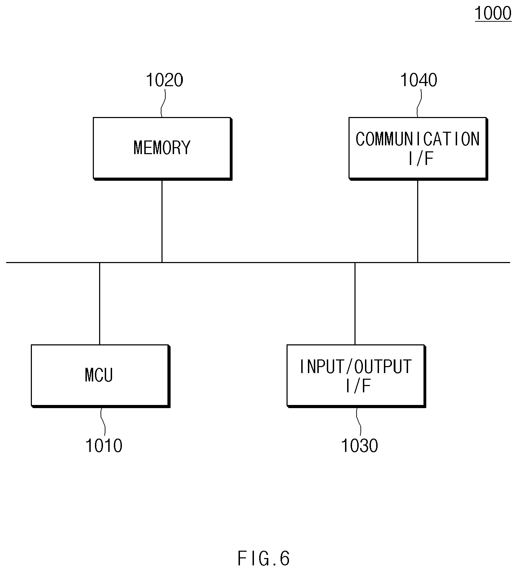

FIG. 6 is a block diagram showing a hardware configuration of a computing system for performing a control method of a battery management apparatus, according to an embodiment disclosed herein.

Referring to FIG. 6, a computing system 1000 according to an embodiment disclosed herein may include a microcontroller unit (MCU) 1010, a memory 1020, an input/output interface (I/F) 1030, and a communication I/F 1040.

The MCU 1010 may be a processor that executes various programs (e.g., a battery cell voltage measurement program, a switching control program, etc.) stored in the memory 1020, processes various data including voltage, internal resistance, etc., of a battery cell through these programs, and performs the above-described functions of the battery management apparatus 100 shown in FIG. 1.

The memory 1020 may store various programs regarding voltage measurement, switching control, etc., of the battery cell. Moreover, the memory 1020 may store various data such as a voltage, an internal resistance, etc., of the battery cell.

The memory 1020 may be provided in plural, depending on a need. The memory 1020 may be volatile memory or non-volatile memory. For the memory 1020 as the volatile memory, random access memory (RAM), dynamic RAM (DRAM), static RAM (SRAM), etc., may be used. For the memory 1020 as the nonvolatile memory, read only memory (ROM), programmable ROM (PROM), electrically alterable ROM (EAROM), erasable PROM (EPROM), electrically erasable PROM (EEPROM), flash memory, etc., may be used. The above-listed examples of the memory 1020 are merely examples and are not limited thereto.

The input/output I/F 1030 may provide an interface for transmitting and receiving data by connecting an input device (not shown) such as a keyboard, a mouse, a touch panel, etc., and an output device such as a display (not shown), etc., to the MCU 1010.

The communication I/F 1040, which is a component capable of transmitting and receiving various data to and from a server, may be various devices capable of supporting wired or wireless communication. For example, a program for voltage measurement and switching control for a battery cell, various data, etc., may be transmitted and received to and from a separately provided external server through the communication I/F 1040.

As such, a computer program according to an embodiment disclosed herein may be recorded in the memory 1020 and processed by the MCU 1010, thus being implemented as a module that performs functions shown in FIG. 1.

Even though all components constituting an embodiment disclosed herein have been described above as being combined into one or operating in combination, the embodiments disclosed herein are not necessarily limited to the embodiments. That is, within the object scope of the embodiments disclosed herein, all the components may operate by being selectively combined into one or more.

Moreover, terms such as "include", "constitute" or "have" described above may mean that the corresponding component may be inherent unless otherwise stated, and thus should be construed as further including other components rather than excluding other components. All terms including technical or scientific terms have the same meanings as those generally understood by those of ordinary skill in the art to which the embodiments disclosed herein pertain, unless defined otherwise. The terms used generally like terms defined in dictionaries should be interpreted as having meanings that are the same as the contextual meanings of the relevant technology and should not be interpreted as having ideal or excessively formal meanings unless they are clearly defined in the present document.

## Claims

1. A battery management apparatus (100) comprising:
a switching unit (110) configured to control electrical connection with a battery module (210);
a controller (120) configured to measure a voltage of a battery cell included in the battery module (210) and to control a driving current (I_{CC}) transferred from the battery module (210) by controlling on/off of the switching unit (110) when the voltage of the battery cell is measured,
**characterized in that**, when the voltage of the battery cell is measured, the controller (120) is configured to turn off the switching unit (110) such that the driving current (I_{CC}) does not flow to an internal resistor (R_{b0}-R_{bn}) of the battery module (210), wherein the driving current (I_{CC}) is a driving current (I_{CC}) of the controller (120).

2. The battery management apparatus (100) of claim 1, wherein when the switching unit (110) is turned on, the battery module (210) and the controller (120) are configured such that they are electrically connected to each other to transfer the driving current (I_{CC}) through the internal resistor (R_{b0}-R_{bn}) of the battery module (210).

3. The battery management apparatus (100) of claim 1, wherein the internal resistor (R_{b0}-R_{bn}) of the battery module (210) is the internal resistor (R_{b0}-R_{bn}) of battery cells provided at opposite ends among a plurality of battery cells included in the battery module (210).

4. The battery management apparatus (100) of claim 1, wherein the controller (120) is further configured to generate a control signal to turn off the switching unit (110) when the voltage of the battery cell is measured.

5. The battery management apparatus (100) of claim 1, wherein the switching unit (110) is provided inside the controller (120).

6. The battery management apparatus (100) of claim 1, further comprising a power supply unit (130) configured to supply the driving current (I_{CC}) to the controller (120).

7. The battery management apparatus (100) of claim 6, wherein the power supply unit (130) is further configured to supply stored power to the controller (120) when the switching unit (110) is turned off by the controller (120).

8. The battery management apparatus (100) of claim 6, wherein the power supply unit (130) comprises at least one capacitor (C_{MV}).

9. The battery management apparatus (100) of claim 8, wherein the capacitor (C_{MV}) of the power supply unit (130) is configured to charge by being supplied with power from the battery module (210) when the switching unit (110) is in an on state.

10. A battery system (10) comprising a battery management apparatus (100) according to any of the preceding claims, the battery system (10) further comprising:
a battery module (210) comprising a plurality of battery cells;
an electricity storage unit (220) connected to the battery module (210) to store a voltage of each battery cell; and
wherein the switching unit (110) is provided between the battery module (210) and the controller (120) to control electrical connection between the battery module (210) and the controller (120),
wherein the controller (120) is configured to measure the voltage of the battery cell based on the voltage stored in the electricity storage unit (220).

11. The battery system (10) of claim 10, wherein the electricity storage unit (220) comprises a plurality of capacitors (C_{V1}-C_{Vn}) provided to correspond to the battery cells, respectively.

## Patentansprüche

1. Batterieverwaltungsvorrichtung (100) aufweisend:
eine Schalteinheit (110), die konfiguriert ist, eine elektrische Verbindung mit einem Batteriemodul (210) zu steuern;
eine Steuerung (120), die konfiguriert ist, eine Spannung einer Batteriezelle, die in dem Batteriemodul (210) enthalten ist, zu messen und einen Antriebsstrom (I_{CC}), der von dem Batteriemodul (210) übertragen wird, durch Steuern von Einschalten/Ausschalten der Schalteinheit (110) zu steuern, wenn die Spannung der Batteriezelle gemessen wird,
**dadurch gekennzeichnet, dass**, wenn die Spannung der Batteriezelle gemessen wird, die Steuerung (120) konfiguriert ist, die Schalteinheit (110) auszuschalten, so dass der Antriebsstrom (I_{CC}) nicht zu einem internen Widerstand (R_{b0}-R_{bn}) des Batteriemoduls (210) fließt, wobei der Antriebsstrom (I_{CC}) ein Antriebsstrom (I_{CC}) der Steuerung (120) ist.

2. Batterieverwaltungsvorrichtung (100) nach Anspruch 1, wobei, wenn die Schalteinheit (110) eingeschaltet ist, das Batteriemodul (210) und die Steuerung (120) so konfiguriert sind, dass sie elektrisch miteinander verbunden sind, um den Antriebsstrom (I_{CC}) durch den internen Widerstand (R_{b0}-R_{bn}) des Batteriemoduls (210) zu übertragen.

3. Batterieverwaltungsvorrichtung (100) nach Anspruch 1, wobei der interne Widerstand (R_{b0}-R_{bn}) des Batteriemoduls (210) der interne Widerstand (R_{b0}-R_{bn}) von Batteriezellen ist, die an gegenüberliegenden Enden von mehreren Batteriezellen, die in dem Batteriemodul (210) enthalten sind, bereitgestellt sind.

4. Batterieverwaltungsvorrichtung (100) nach Anspruch 1, wobei die Steuerung (120) ferner konfiguriert ist, ein Steuersignal zu erzeugen, um die Schalteinheit (110) auszuschalten, wenn die Spannung der Batteriezelle gemessen wird.

5. Batterieverwaltungsvorrichtung (100) nach Anspruch 1, wobei die Schalteinheit (110) innerhalb der Steuerung (120) bereitgestellt ist.

6. Batterieverwaltungsvorrichtung (100) nach Anspruch 1, ferner aufweisend eine Stromversorgungseinheit (130), die konfiguriert ist, den Antriebsstrom (I_{CC}) der Steuerung (120) zuzuführen.

7. Batterieverwaltungsvorrichtung (100) nach Anspruch 6, wobei die Stromversorgungseinheit (130) ferner konfiguriert ist, gespeicherte Energie der Steuerung (120) zuzuführen, wenn die Schalteinheit (110) durch die Steuerung (120) ausgeschaltet ist.

8. Batterieverwaltungsvorrichtung (100) nach Anspruch 6, wobei die Stromversorgungseinheit (130) mindestens einen Kondensator (C_{MV}) aufweist.

9. Batterieverwaltungsvorrichtung (100) nach Anspruch 8, wobei der Kondensator (C_{MV}) der Stromversorgungseinheit (130) konfiguriert ist, zu laden, indem er mit Energie von dem Batteriemodul (210) versorgt wird, wenn die Schalteinheit (110) in einem eingeschalteten Zustand ist.

10. Batteriesystem (10) aufweisend eine Batterieverwaltungsvorrichtung (100) nach einem der vorhergehenden Ansprüche, wobei das Batteriesystem (10) ferner aufweist:
ein Batteriemodul (210), das mehrere Batteriezellen aufweist;
eine Elektrizitätsspeichereinheit (220), die mit dem Batteriemodul (210) verbunden ist, um eine Spannung jeder Batteriezelle zu speichern; und
wobei die Schalteinheit (110) zwischen dem Batteriemodul (210) und der Steuerung (120) bereitgestellt ist, um eine elektrische Verbindung zwischen dem Batteriemodul (210) und der Steuerung (120) zu steuern,
wobei die Steuerung (120) konfiguriert ist, die Spannung der Batteriezelle basierend auf der Spannung, die in der Elektrizitätsspeichereinheit (220) gespeichert ist, zu messen.

11. Batteriesystem (10) nach Anspruch 10, wobei die Elektrizitätsspeichereinheit (220) mehrere Kondensatoren (C_{V1}-C_{Vn}) aufweist, die bereitgestellt sind, um jeweils den Batteriezellen zu entsprechen.

## Revendications

1. Appareil de gestion de batterie (100) comportant :
une unité de commutation (110) configurée pour commander la connexion électrique avec un module de batterie (210) ;
un dispositif de commande (120) configuré pour mesurer une tension d'un élément de batterie se trouvant dans le module de batterie (210) et pour commander un courant d'excitation (I_{CC}) transféré en provenance du module de batterie (210) par la commande de l'état de marche/arrêt de l'unité de commutation (110) lors de la mesure de la tension de l'élément de batterie,
**caractérisé en ce que**, lors de la mesure de la tension de l'élément de batterie, le dispositif de commande (120) est configuré pour désactiver l'unité de commutation (110) de telle sorte que le courant d'excitation (I_{CC}) ne circule pas vers une résistance interne (R_{b0}-R_{bn}) du module de batterie (210), dans lequel le courant d'excitation (I_{CC}) est un courant d'excitation (I_{CC}) du dispositif de commande (120).

2. Appareil de gestion de batterie (100) selon la revendication 1, dans lequel, quand l'unité de commutation (110) est activée, le module de batterie (210) et le dispositif de commande (120) sont configurés de telle sorte qu'ils sont connectés électriquement l'un par rapport à l'autre afin de transférer le courant d'excitation (I_{CC}) au travers de la résistance interne (R_{b0}-R_{bn}) du module de batterie (210).

3. Appareil de gestion de batterie (100) selon la revendication 1, dans lequel la résistance interne (R_{b0}-R_{bn}) du module de batterie (210) est la résistance interne (R_{b0}-R_{bn}) des éléments de batterie mis en œuvre au niveau des extrémités opposées parmi une pluralité d'éléments de batterie se trouvant dans le module de batterie (210).

4. Appareil de gestion de batterie (100) selon la revendication 1, dans lequel le dispositif de commande (120) est par ailleurs configuré pour générer un signal de commande afin de désactiver l'unité de commutation (110) lors de la mesure de la tension de l'élément de batterie.

5. Appareil de gestion de batterie (100) selon la revendication 1, dans lequel l'unité de commutation (110) est mise en œuvre à l'intérieur du dispositif de commande (120).

6. Appareil de gestion de batterie (100) selon la revendication 1, comportant par ailleurs une unité d'alimentation (130) configurée pour fournir le courant d'excitation (I_{CC}) au dispositif de commande (120).

7. Appareil de gestion de batterie (100) selon la revendication 6, dans lequel l'unité d'alimentation (130) est par ailleurs configurée pour fournir de l'énergie stockée au dispositif de commande (120) quand l'unité de commutation (110) est désactivée par le dispositif de commande (120).

8. Appareil de gestion de batterie (100) selon la revendication 6, dans lequel l'unité d'alimentation (130) comporte au moins un condensateur (C_{MV}).

9. Appareil de gestion de batterie (100) selon la revendication 8, dans lequel le condensateur (C_{MV}) de l'unité d'alimentation (130) est configuré pour se charger en étant alimenté en énergie en provenance du module de batterie (210) quand l'unité de commutation (110) est dans un état de marche.

10. Système de batterie (10) comportant un appareil de gestion de batterie (100) selon l'une quelconque des revendications précédentes, le système de batterie (10) comportant par ailleurs :
un module de batterie (210) comportant une pluralité d'éléments de batterie ;
une unité de stockage d'électricité (220) connectée au module de batterie (210) pour stocker une tension de chaque élément de batterie ; et
dans lequel l'unité de commutation (110) est mise en œuvre entre le module de batterie (210) et le dispositif de commande (120) pour commander la connexion électrique entre le module de batterie (210) et le dispositif de commande (120),
dans lequel le dispositif de commande (120) est configuré pour mesurer la tension de l'élément de batterie sur la base de la tension stockée dans l'unité de stockage d'électricité (220).

11. Système de batterie (10) selon la revendication 10, dans lequel l'unité de stockage d'électricité (220) comporte une pluralité de condensateurs (C_{V1}-C_{Vn}) qui sont mis en œuvre pour correspondre aux éléments de batterie, respectivement.
